# EUROPEAN PATENT APPLICATION

(11) **EP 1 388 771 A2**
(43) Date of publication of application: **11.02.2004**
(21) Application number: 03017979.0
(22) Date of filing: 06.08.2003
(51) Int. Cl.: G05B 23/02, G01R 31/00

(54) **Control Unit for a Vehicle**

(30) Priority: 09.08.2002 JP 2002232837
(71) Applicant: FUJI JUKOGYO KABUSHIKI KAISHA, Tokyo (JP)
(72) Inventor: Hanamata, Kenichi, Shinjuku-ku, Tokyo (JP)
(74) Representative: Sajda, Wolf E., Dipl.-Phys.

(57) **Abstract**

A control unit (10) for a vehicle comprises a self-diagnosis function for self-diagnosing a verification of a reception of a signal concerning a switch (13, 14, 15) based on various vehicle information data, wherein the control unit (10) is connected with a function checker (22) which outputs a predetermined control signal when the control unit (10) receives a predetermined one of the various vehicle information data, and the predetermined control signal output from the function checker (22) into the control unit (10) causes the control unit (10) to activate the self-diagnosis function for establishing a self-diagnosis mode. Furthermore, the control unit (10) outputs a diagnosed result of the self-diagnosis mode as an actuating control signal for controlling at least either one of a room lamp (17) or an indicator lamp (18). Thus, there is no need to add a large scaled modification to the control unit (10) or the function checker (22) even if the new self-diagnosis function of the switches (13, 14, 15) is added to the control unit (10).

## Description

### BACKGROUND OF THE INVENTION

The present invention relates to a control unit for a vehicle.

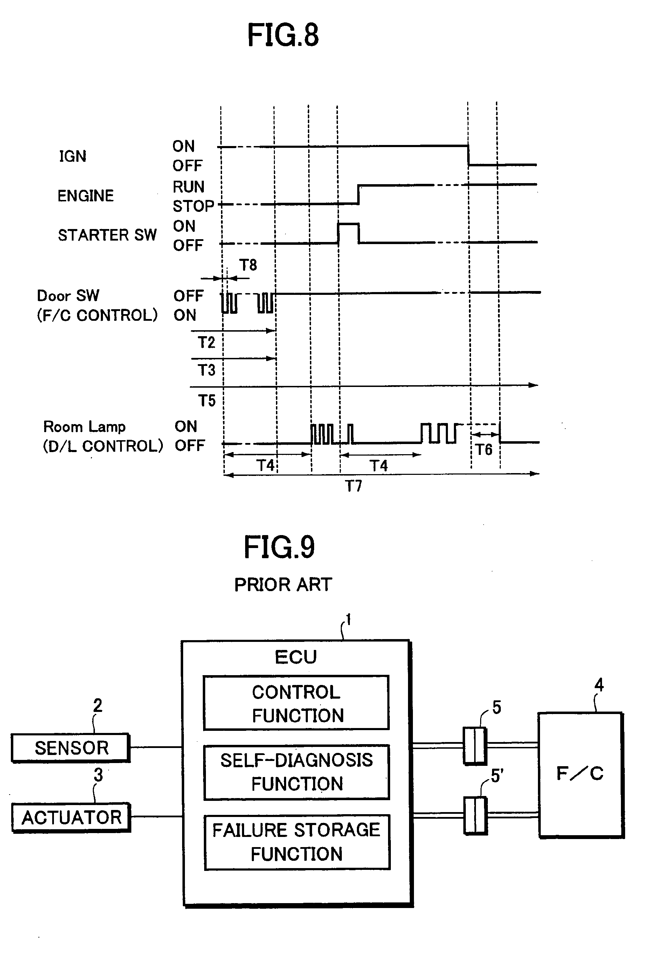

As shown in Fig. 9, an automobile is equipped with various control units (ECU: Electronic Control Unit) 1 for monitoring a fuel injection control system, an ignition timing control system, an anti-lock brake control system (ABS), and etc. Conventionally, such a control unit 1 is installed with a self-diagnosis function as a standard function. During monitoring the various sensors 2, actuators 3, and harnesses, on detecting an abnormality such as a failure, a disconnection, ora short-circuit, the self-diagnosis function provides display on an instrument panel, and stores error data. Moreover, the self-diagnosis function is activated by connecting a diagnosis instrument (i.e. a function checker, hereinafter abbreviated as F/C) 4 thereto via an F/C connector 5 to allow accesses to various data signals for processing by the control unit 1, and to allow the access to present failures and preceding error data if a specific code is inputted, for simplifying complicated failure diagnosis.

However, the conventional control unit for a vehicle described above is accompanied with the following problems. The problems arise when a new diagnosis function for checking an input status of various switching signals is equipped in addition to the aforementioned self-diagnosis function, or when a newly redesigned self-diagnosis function is added to various control units without the self-diagnosis function. These refinements require an update of a software with the new self-diagnosis function, and additional pins of a connector between the control unit 1 and F/C 4 used for activating the new self-diagnosis function and for outputting diagnosed results. If the connector does not have enough number of pins, the connector 5 must be replaced, or an additional connector 5' must be added to the connector 5. These requirements cause the problems where a hardware including the control unit 1 and the F/C 4 require extensive modifications. Accordingly, the present invention is made in order to solve the problems of the conventional control unit for the vehicle described above.

### SUMMARY OF THE INVENTION

It is a primary object of the present invention to provide a control unit for a vehicle without extensive modifications to a hardware such as the control unit and a function checker even if the control unit is further furnished with a new self-diagnosis function by connecting the function checker to the control unit.

In order to accomplish the aforementioned and other obj ects, according to a first aspect of the present invention, there is provided a control unit for a vehicle having a self-diagnosis function for self-diagnosing a verification of a reception of a signal concerning a switch based on various vehicle information data, comprising a function checker connected with the control unit for outputting a predetermined control signal into the control unit when the control unit receives a predetermined signal from the various vehicle information data, wherein the predetermined control signal causes the control unit to activate the self-diagnosis function to establish a self-diagnosis mode.

Further, the control unit outputs a diagnosed result of the self-diagnosis mode as the vehicle information data to the function checker.

The function checker displays the diagnosed result based on the received vehicle information data.

Moreover, the control unit outputs the diagnosed result as an activated control signal for controlling at least either one of a room lamp and an indicator lamp.

### BRIEF DESCRIPTION OF DRAWINGS

These and other objects and advantages of the present invention will become clearly understood from the following description with reference to accompanying drawings, wherein:
Fig. 1 is a block diagram showing a control unit for a vehicle according to the present invention;
Fig. 2 is a flow chart in accordance with the control unit;
Fig. 3 is a block diagram showing a double lock unit to which the present invention is applied;
Fig. 4 is a timing chart in accordance with the double lock unit;
Fig. 5A shows an output pattern of an inspected result in accordance with the double lock unit where the inspected result is not abnormal, and Fig. 5B shows another pattern where the inspected result is abnormal;
Fig. 6 is another timing chart in accordance with the double lock unit;
Fig. 7 is the other timing chart in accordance with the double lock unit;
Fig. 8 is the other timing chart in accordance with the double lock unit; and
Fig. 9 is the block diagram showing a conventional control unit for the vehicle.

### DESCRIPTION OF THE PREFERRED EMBODIMENTS

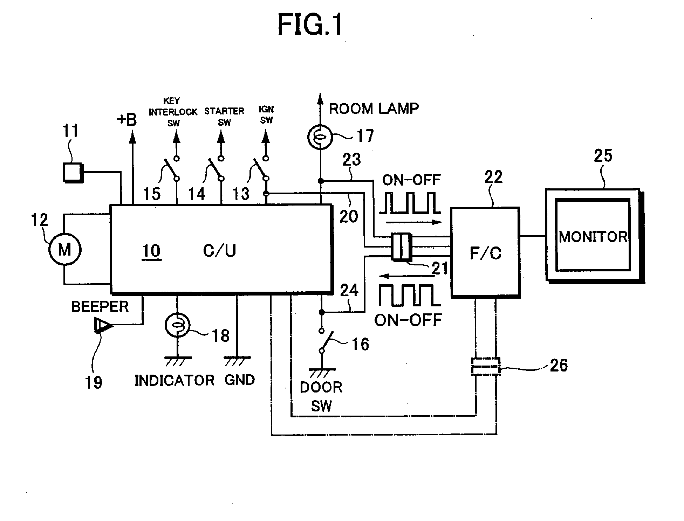

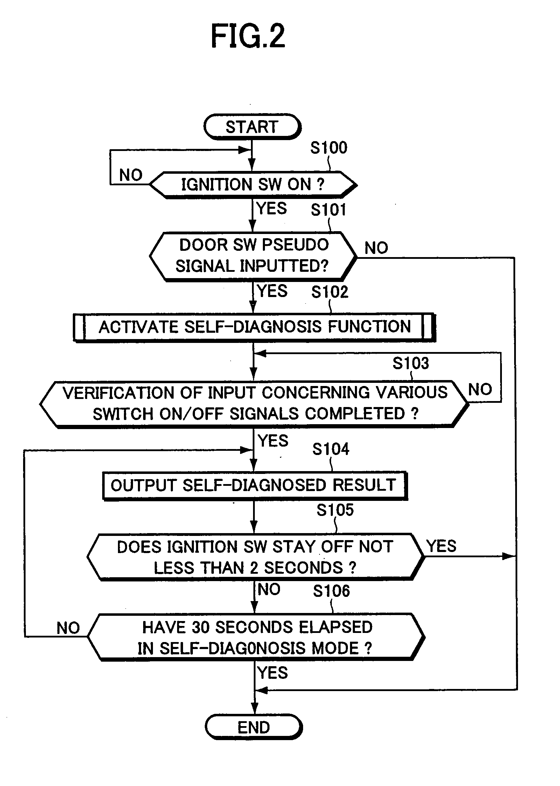

A preferredembodimentofthepresentinvention,presently considered to be the best mode, is hereinafter described in detail with reference to Figs. 1 and 2. Fig. 1 is a block diagram showing a preferable configuration of a control unit for a vehicle according to the present invention. Fig. 2 is a flow chart in accordance with the control unit.

As shown in Fig. 1, various sensors 11 and actuators 12 disposed in the control system are connected to a control unit 10. Detection signals detected by the various sensors 11 are inputted into the control unit 10, while driving signals to the actuators 12 are outputted by the control unit 10. Further, a first type of switch is connected to the control unit 10. It should be noted that a verification of capture by the control unit 10 concerning a first type of switch is desirable to be checked by the self-diagnosis function. The first type of the switch includes an ignition switch 13 and an engine starter switch 14 for controlling an engine to start and stop, and a key interlock switch 15 for locking a shift lever in a "P"(Parking) position. Thus, on/off action signals from the various switches 13-15 are inputted into the control unit 10. A second type of the switch which has no need for the verification of the capture by the self-diagnosis function is also connected to the control unit 10. For example, the second type of the switch includes a door switch 16. The door switch 16 is set on/off by open/close of a door. On/off action signals from the door switch 16 are inputted into the control unit 10. Moreover, a room lamp 17 to be switched on and off in accordance with an action of opening/closing the door, an indicator lamp 18 for notifying a driver of an abnormality, and a beeper 19 are connected to the control unit 10. From the control unit, the respective on/off signals are outputted into the room lamp 17, the indicator lamp 18, and the beeper 19. It should be noted that the control unit 10 consistently derives power from a battery.

Further, a communication line 20 is connected between the control unit 10 and the ignition switch 13 by using an input/output interface. The communication line 20 can be connected to the F/C 22 via a detachable connector 21. Further, a communication line 23 is connected between the control unit 10 and the room lamp 17. The communication line 23 is connected to the F/C 22 via the connector 21. Moreover, a communication line 24 is connected between the control unit 10 and a door switch 16. The communication line 24 is connected to the F/C 22 via the connector 21. The communication lines 23 and 24 are connected by using the interface as the communication line 20. It is desirable that the connector 21 is mounted adjacent to driver's feet so as not to interfere with the driver.

The F/C 22 is a portable measuring instrument. When an "on" action signal, as the resultant of an "on" action of the ignition switch 13, is inputted into the F/C 22, the F/C 22 outputs a predetermined control signal to the control unit 10 via the communication line 24 and the connector 21, as shown with the left direction arrow line in Fig. 1. The predetermined control signal is a door switch pseudo signal. The door switch pseudo signal imitates an on/off action signal to be outputted by the door switch 16 to the control unit 10. It should be noted that the on/off action signal is outputted when the door switch 16 detects an open or close action of the door. The door switch pseudo signal is outputted by high-speed pulses, such as the output of the on/off action signals at a rate of 10 times per a second. A usual open/close action of the door never exhibits such a pulse form.

When the on/off action signal outputted by the control unit 10 to the room lamp 17 is inputted into the F/C 22 via the communication line 23 and the connector 21 along the right direction arrow line shown in Fig. 1, the F/C 22 diagnoses and analyzes the inputted on/off action signal by following previously stored on/off action pattern, and then outputs the diagnosed result to a monitor 25 attached.

By the way, the control unit 10 is adapted in such a way that a central processing unit (not shown) provided therein executes various programs implemented as a firmware in a ROM, thereby performing various controls and self-diagnoses and storing the diagnosed result in a RAM. That is, the control unit 10 controls and drives the actuator 12 according to the signals detected by the various sensors 11 to optimally control a fuel injection control system, an ignition timing control system, and an ABS control system. Further, the control unit 10 keeps track of the various sensors 11, the actuators 12, and the harnesses integrally. On detecting an abnormality, the control unit 10 switches the indicator lamp 18 on, and stores error data in the RAM. The control unit 10 is provided with a self-diagnosis function. The self-diagnosis function is activated by connecting the F/C 22 to the control unit 10 via an F/C connector 26 (indicated by alternate long and short dashed lines in Fig. 1). The self-diagnosis function can access the various data signals in process within the control unit 10 from the F/C 22, and can access present failures and preceding error data if a specific code is inputted from the F/C 22.

A new self-diagnosis function for diagnosing various switch signals desirable to be verified whether the capture by the control unit 10 is made or not, is further provided with the control unit 10. Conventionally, the verification has not been made. The new self-diagnosis function has been adapted to perform a self-diagnosis of the verification of the capture by the control unit 10 concerning the on/of signals of the various switches 13-15. The new self-diagnosis function is activated by an input of a specific signal, i . e. the door pseudo signal, from the F/C 22. The central processing unit of the control unit 10 is adapted to execute a specific program implemented as the firmware in the ROM, thereby the self-diagnosing verification of the capture of each switch signal, and then the diagnosed results are stored in the RAM, outputted as the specific on/off action signals of the room lamp 17, and fed to the F/C 22 via the communication line 23 and the connector 21. It should be noted that not only the diagnosed result but also the verification information indicative of the activation of the new self-diagnosis function and the verification information indicative of a completion of the new self-diagnosis function might be identified by a lighting action of the room lamp 17. It should also be noted that a configuration might be adopted according to which the diagnosed result is outputted not only by the lighting action of the room lamp 17 but also by the lighting action of the indicator lamp 18.

More specifically, as shown in a flow chart of Fig. 2, in step 100, the control unit 10 determines whether the ignition switch 13 has been turned on or not based on reading the on/off action signal from the ignition switch 13. While the ignition switch 13 is set off, step 100 is executed repeatedly. When the ignition switch 13 is set on, the process proceeds to step 101 to determine whether or not the door switch pseudo signal is outputted by the F/C 22.

No input of the door switch pseudo signal from the F/C 22 in step 101 indicates the casewhere the connector 21 is detached. In this case, the control unit 10 optimally controls the normal fuel injection control system, the ignition timing control system, and the ABS control system, and also brings a normal self-diagnosis function into action.

On the other hand, when the F/C 22 is connected to the control unit 10 via the connector 21, the door switch pseudo signal outputted by the F/C 22 in response to the output of the "on" action signal of the ignition switch 13 is inputted into the control unit 10. Thereupon, the process proceeds to step 102 to activate the new self-diagnosis function, thereby establishing a self-diagnosis mode.

In the next step 103, a self-diagnosis is performed on the state of capture of the on/off signal concerning the various switches 13-15. It is on the premise that every switch 13-15 is turned on to be connected to the control unit 10. After execution of the new self-diagnosis function and completion of the verification of the input concerning the various switch signals, the process proceeds to step 104 to store the diagnosed result in the RAM, and to output the specific on/off action signal to the room lamp 17. The diagnosed result is also fed to the F/C 22 via the communication line 23 and the connector 21. Then, the process proceeds to step 105 to determine whether or not a predetermined period, for example two seconds, has elapsed since the "off" action of the ignition switch 13. With a lapse of the predetermined period, the process leaves the routine to return to be subj ected to the normal control. On the other hand, without the "off" action of the ignition switch 13, the process proceeds to step 106 to determine whether or not another predetermined period, for example 30 seconds, has elapsed since the execution of the self-diagnosis mode. With the lapse of the predetermined period, the process leaves the routine to return to be subj ected to the normal control. Without the lapse of the predetermined period, the process goes back to step 104, and thus the steps 104-106 are repeatedly executed.

As described above, according to the control unit for a vehicle of the present invention,the new self-diagnosis function, which is activated by the input and output of the ignition switch signal and the door switch pseudo signal between the control unit 10 and the F/C 22 via the communication lines 20, 23 and 24 and the connector 21 belonging to the input/output interface, is further equipped in the control unit 10. The diagnosed result of the new self-diagnosis function is outputted and identified by a lighting action of the room lamp 17, and also fed to the F/C via the connector 21.

Thus, the new self-diagnosis function is easily utilized by the present input/output interface provided for the control unit 10. Accordingly, without extensive modification required in the conventional cases, all that is required are just modification on software for adapting the new self-diagnosis function, and the utilization of the communication lines 20, 23 and 24 and the connector 21. This feature allows a significant simplificationofthecomplicatedfailurediagnosisasintended, while minimizing additional costs.

Further, a diagnosed result of the new self-diagnosis function, the verification of the reception of the signal indicating establishment of the diagnosis mode, and the verification of the completion concerning the establishment of the diagnosis mode, are visually identified with ease by the lighting action of the room lamp 17 or the indicator lamp 18, thereby increasing the operational efficiency of an inspector.

Moreover, the configuration also allows the inspector to activate the new self-diagnosis function by inputting the door switch pseudo signal directly into the control unit 10, thereby enabling the execution and the completion of the self-diagnosis only by the vehicle itself without using a measuring instrument such as the F/C 22 or a select monitor.

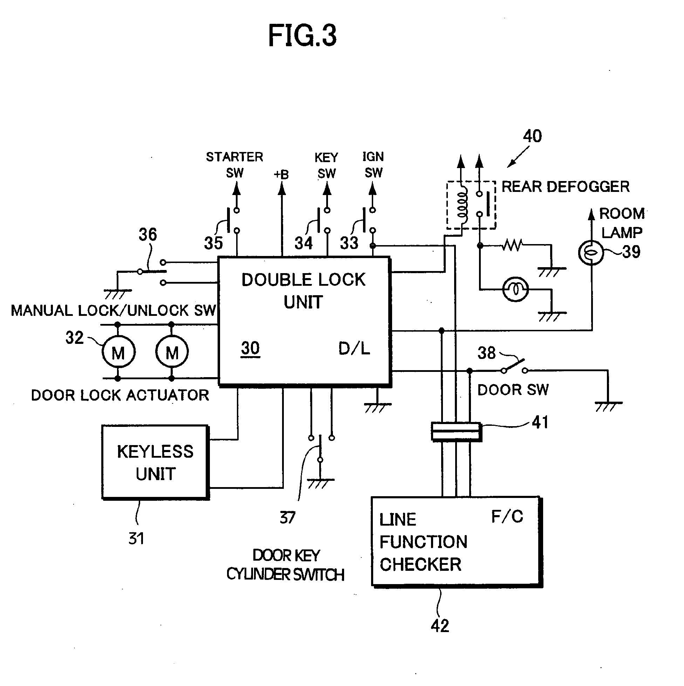

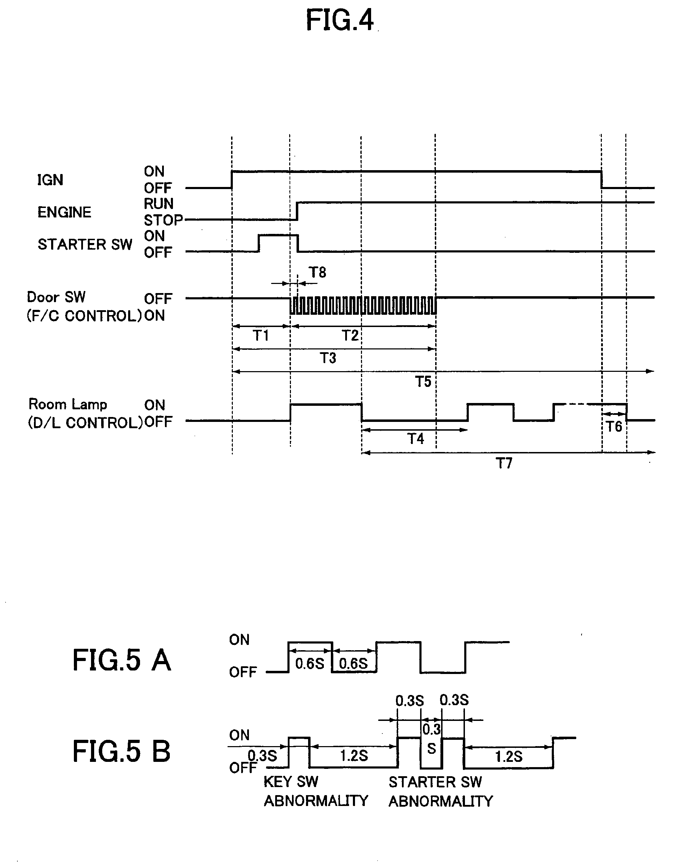

Basic operation of a double lock unit, to which the present invention is applied, is now described in detail with reference to Figs. 3-5. Fig. 3 is a block diagram showing the general configuration of the double lock unit to which the present invention is applied. Fig. 4 is a timing chart in accordance with the double lock unit. Figs. 5A and 5B illustrate an output pattern of an inspected result in accordance with the double lock unit. More specifically, Fig. 5A shows a pattern where the inspected result is not abnormal, and Fig. 5B shows another pattern where the inspected result is abnormal.

As shown in Fig. 3, a keyless unit 31 disposed in the control system, and a door lock actuator 32, are connected to the double lock unit (hereinafter referred to as D/L) 30. Further, a first type of the switch is connected to the D/L 30. It should be noted that the verification of capture by the D/L 30 concerning the first type of the switch is desirable to be checked by the self-diagnosis function. The first type of the switch includes an ignition switch 33, a key interlock switch 34, and an engine starter switch 35. On/off action signals from the various switches 33-35 are inputted into the D/L 30.

Further, a second type of the switch without the need for the verification of capture by the self-diagnosis function is connected to the D/L 30. The second type of the switch includes a manual lock/unlock switch 36, a door key cylinder switch 37, and a door switch 38. On/off action signals from the various switches 36-38 are also inputted into the D/L 30. Moreover, a room lamp 39 lighting in accordance with an open/close action of a door, and a rear defogger 40 are connected to the D/L 30. Respective on/off action signals are outputted to the room lamp 39 and the rear defogger 40. It should be noted that the D/L 30 consistently derives power from the battery.

When the D/L 30 is connected to the F/C 42 via the connector 41 similar to the aforementioned connector 21, the on/off action signals of the ignition switch 33 and the room lamp 39 are outputted by the D/L 30 to the F/C 42, and the specific signal (i.e. door switch pseudo signal) outputted by the F/C 42 is inputted into the D/L 30.

Further, the self-diagnosis function for diagnosing the verification of the reception of the on/off signals concerning the various switches 33-35 connected to the D/L 30 are added to the D/L 30. An "on" action of the ignition switch 33 causes the F/C 42 to output the door switch pseudo signal to the D/L 3.0, thereby activating the self-diagnosis function. Detailed modification on setting required to execute the self-diagnosis function is applied to the D/L 30.

Then, the inspector connects the D/L 30 and the F/C 42 by the connector 41, and inserts the key into the ignition switch 33 to start the engine. An information data signal indicative of "on" action of the engine starter switch 35 at this time is written into RAM of the D/L 30.

As shown in Fig. 4, the F/C 42 outputs the door switch pseudo signal, i.e. the door switch on/off signal, by high-speed pulse waveforms, T1 second (preferably 1.0 second) after the "on" action of the ignition switch 33, and stop the outputting T2 seconds (preferably 3.0 seconds) after the start-up of the output. The door switch pseudo signal in this case alternates on and off at T8 second (preferably 0.2 second) intervals.

When the D/L 30 detects the door switch pseudo signal within T3 seconds (T3=T1+T2) after the "on"action of the ignition switch 33, or detects predetermined times (ex. 10 times) of the on/off concerning the door switch on/off action signals from the door switch 38, the self-diagnosis function for diagnosing the verification of the reception of the on/off signals concerning the various switches 33-35 is activated, thereby establishing the self-diagnosis mode.

On establishing the self-diagnosis mode, the D/L 30 immediately extinguishes the room lamp 39, executes the verification of the reception of the on/off signals concerning the various switches 33-35, and verifies the information data signal in regard to the engine starter switch 35 written in the RAM.

Then, the D/L 30 outputs the diagnosed result of the self-diagnosis by the on/off action signal for controlling the room lamp 39, T4 seconds (preferably 2.0 second) after the establishment of the self-diagnosis mode. In the case where the reception of the on/off signals concerning the various switches 33-35 is verified, and the diagnosed result does not indicate abnormality, the outputting pattern of the diagnosed result exhibits lighting action of the room lamp 39 alternating at uniform intervals, for example intervals of 0.6 second, as shown in Fig. 5A.

On the other hand, in the case where the diagnosed result indicates abnormality, the D/L 30 controls the room lamp 39 to light at odd intervals, as shown in Fig. 5B. In this case, when the key switch 34 is abnormal, the D/L 30 controls the room lamp 39 to light for only 0.3 second. An abnormality concerning the engine starter switch 35, causes the room lamp 39 to light by an on/off/on pattern at the interval of 0.3 second after a predetermined interval (preferably 1.2 seconds). Then, theD/L 30 continues outputting the diagnosed result until the self-diagnosis mode comes to an end.

In a state where the self-diagnosis mode can be accepted, the room lamp 39 lights without open/close of a door. Thus, the establishment of the self-diagnosis mode can be easily identified by seeing.

By the way, if an on/off action signal to the room lamp 39 or an input of a predetermined signal, i.e. the input of the diagnosed result of the self-diagnosis, is not obtained within T5 seconds (preferably 10.0 seconds) after the "on" action of the ignition switch 33, the F/C 42 determines that the D/L is not in the self-diagnosis mode, and requires further execution of the "on" action concerning the ignition switch 33 on a display thereof.

Then, on detecting the "off" action of the ignition switch 33 for T6 seconds (preferably 2.0 seconds), the D/L 30 leaves the self-diagnosis mode. On the other hand, if not less than T7 seconds (preferably 30.0 seconds) elapse after the establishment of the self-diagnosis mode, the D/L 30 forcefully terminates the self-diagnosis mode.

It should be noted that the room lamp 39 is set such that a normal opening of the door allows the room lamp 39 to immediately light up by the door switch "on" action signal, while closing of the door allows the room lamp 39 to light for about additional seven seconds after an input of the door switch off signal, followed by fade-out in about five seconds, by an undescribed delay circuit. Such a function is temporarily suspended in the self-diagnosis mode.

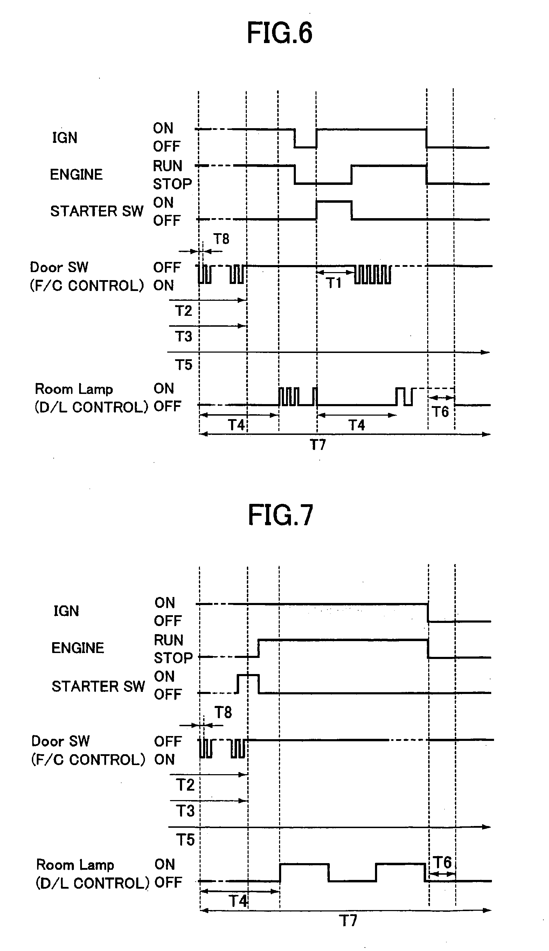

As shown in Fig. 6, after the establishment of the self-diagnosis mode, the "off" action of the ignition switch 33, provided the "off" action is followed by the "on" action within T6 seconds thereafter, still maintains the self-diagnosis mode. Fig. 6 is a timing chart in accordance with the double lock unit, and shows the case where the verification of the on/off action signal concerning the engine starter switch 35 failed after the output of the diagnosed result, thus followed by a restart of the engine.

That is, as shown in Fig. 6, if the self-diagnosed result to be expressed in a lighting action of the room lamp 39 by the D/L 30 is outputted T4 seconds thereafter to prove that the reception of the on/off action switch concerning the engine starter switch 35 has not been verified, an operation is performed where the ignition switch 33 is once turned off to stop the engine, followed by another "on" action to restart the engine.

At this time, detecting another "on" action signal generated based on the "on" action of the ignition switch 33, the D/L 30 immediately terminates the output of the diagnosed result of the self-diagnosis, and extinguishes the room lamp 39. Then, T4 seconds after an extinguishment of the room lamp 39, the D/L 30 starts outputting the diagnosed result according to another self-diagnosis.

While the "on" action of the ignition switch 33 is followed by the output of the door switch pseudo signal from the F/C 42 to the D/L 30, the on/off action signal to the room lamp 39 is not outputted because the D/L 30 is in the self-diagnosis mode.

By the way, if the engine starts before the output of the diagnosed result to the room lamp 39 during the self-diagnosis mode, the diagnosed result is outputted T4 seconds after the establishment of the self-diagnosis mode, as shown in the timing chart of Fig. 7.

As shown in the timing chart of Fig. 8, if no on/off action signal of the engine starter switch 35 is detected in T4 seconds after the establishment of the self-diagnosis mode, and the diagnosed result indicating that the signal of the engine starter switch 35 has not been identified is outputted to the room lamp 39, the first engine start after connection between the F/C 42 and the connector 41 is performed to generate the "on" action of the engine starter switch 35. Then, detecting the "on" action signal concerning the engine starter switch 35, the D/L 30 controls the room lamp 39 to stay out for T4 seconds, subsequently outputting a renewed diagnosed result to the room lamp 39. It should be noted that the destination of the diagnosed result is not restricted to the room lamp 39 . Instead, another indicator lamp, for example the indicator lamp of the rear defogger 40, may be specified as the destination.

While embodiments to which the present invention is applied have been described, the present invention is not restricted to these modes. Instead, the present invention may be applied to another control unit mounted on a vehicle body. Arbitrary modification on detailed settings may be made even in these cases.

As described above, the present invention provides the control unit for a vehicle without the necessity for extensive modification to the hardware such as the control unit and the function checker even if the control unit is further furnished with the new self-diagnosis function in which the function is activated by connecting the function checker to the control unit.

## Claims

1. A control unit (10, 30) for a vehicle having a self-diagnosis function for self-diagnosing a verification of a reception of a signal concerning a switch (13, 14, 15, 33, 34, 35) based on various vehicle information data, comprising:
- a function checker (22, 42) connected with the control unit (10, 30) for outputting a predetermined control signal into the control unit (10, 30) when the control unit (10, 30) receives a predetermined signal from the various vehicle information data,
- wherein the predetermined control signal causes the control unit (10, 30) to activate the self-diagnosis function to establish a self-diagnosis mode.

2. The control unit according to claim 1,
wherein the control unit (10, 30) outputs a diagnosed result of the self-diagnosis mode as the vehicle information data to the function checker (22, 42).

3. A control unit according to claims 1 or 2,
wherein the function checker (22, 42) displays (25) a diagnosed result of the self-diagnosis mode based on the received vehicle information data.

4. The control unit according to claims 1 or 2,
wherein the control unit (10, 30) outputs a diagnosed result of the self-diagnosis mode as an actuating control signal for controlling at least either one of the room lamp (17, 39) or an indicator lamp (18).

5. A control system (10, 30) for a vehicle for self-diagnosing a verification of a reception of signals from a plurality of switches (13, 14, 15, 33, 34, 35), comprising:
- a control unit (10, 30) provided with a self-diagnosis function for verifying the reception of the signals from the switches (13, 14, 15, 33, 34, 35);
- a function checker (22, 42) connected with the control unit (10, 30);
- a first communication line connecting the control unit (10, 30) with a first switch (13, 33) to transmit a first signal issued from the first switch (13, 33) to the control unit (10, 30);
- a second communication line connecting the control unit (10, 30) with a second switch (16, 38) to transmit a second signal issued from the second switch (16, 38) to the control unit (10, 30);
- a third communication line (20) for the function checker (22, 42) to catch the first signal from the first communication line; and
- a fourth communication line (24) for transmitting a pseudo signal of the second signal from the function checker (22, 42) to the control unit (10, 30) through the second communication line when the function checker (22, 42) receives the first signal,
- wherein the control unit (10, 30) activates the self-diagnosis function when receiving the pseudo signal of the second signal, so that the reception of signals from the plurality of switches (13, 14, 15, 33, 34, 35) can be verified.

6. The control system according to claim 5,
wherein the control unit (10, 30) outputs a diagnosed result of the self-diagnosis mode as an actuating control signal for controlling at least either one of a room lamp (17, 39) or an indicator lamp (18).

7. The control system according to claims 5 or 6,
wherein the plurality of switches (13, 14, 15, 33, 34, 35) are an ignition switch (13, 33), a starter switch (14, 35) and a key interlock switch (15, 34), and the first switch is the ignition switch (13, 33).

8. The control system according to any of claims 5 to 7,
wherein the second switch is a door switch (16, 38) which needs no verification of a reception of a signal thereof.
